# EUROPEAN PATENT APPLICATION

(11) **EP 2 779 114 A1**
(43) Date of publication of application: **17.09.2014**
(21) Application number: 13001206.5
(22) Date of filing: 11.03.2013
(51) Int. Cl.: G06T 19/00

(54) **APPARATUS FOR INTERACTIVE VIRTUAL WALKTHROUGH**

(71) Applicant: DAI NIPPON PRINTING CO., LTD., Shinjuku-ku, Tokyo 162-8001 (JP)
(72) Inventor: Matsubara, Takahiro, Tokyo, 162-8001 (JP); Kawai, Naoki, Tokyo, 162-8001 (JP)
(74) Representative: Müller - Hoffmann & Partner

(57) **Abstract**

An omnidirectional image storage unit (110) stores frames of panoramic image shot while moving on the route, a route information storage unit (130) stores route information indicating nodes and branches on the route, and a correspondence information storage unit (120) stores correspondence between each frame and each point on the route. A data updating unit (170) successively updates a current position and a sight direction based on a user's input. An image cutout unit (140) reads out a panoramic image corresponding to a current position and cuts out a field of view image that constructs a field of vision in a sight direction. A route mapping unit (180) creates a route map indicating a current position and a sight direction superimposed upon a plan view of the route. An image display unit (190) displays the field of view image and the route map side by side.

## Description

### BACKGROUND OF THE INVENTION

The present invention relates to a free viewpoint video display apparatus, and particularly, to a technique for displaying a field of vision in any direction viewed from a viewpoint moving along a predetermined route.

Using a camera fitted with a fisheye lens or an omnidirectional mirror allows shooting an omnidirectional image having a field of vision of 360 degrees. Having prepared such omnidirectional images allows providing a service to present an observed image in any direction from any viewpoint position desired by a viewer.

For example, Japanese Unexamined Patent Publication No. JP2001-008232A discloses a technique for having prepared omnidirectional images in an information service center, and in response to a viewer's request, transmitting image data to cause an observed image in any direction from any viewpoint to be displayed on a terminal device screen. Moreover, Google Inc. in California, U.S.A. provides a service, called "Street View," for displaying an observed view in any direction from any viewpoint on a street by use of the Internet.

On the other hand Japanese Unexamined Patent Publication No. JP2010-199971A discloses an apparatus for creating an omnidirectional image by connecting a plurality of images shot using an ordinary digital camera, wherein shooting directions of the individual images are detected in real time and the shot images are read out and displayed in real time. Using this apparatus allows a shooter to recognize in real time which region of the omnidirectional space has already been shot and which region thereof has not yet been shot.

Conventional image display apparatuses using omnidirectional images have always been apparatuses for the purpose of presenting still images, in which a still image according to indication is displayed if a user indicates any viewpoint and indicates an arbitrary line of sight direction. That is, it is possible for the user to obtain an image viewed in a desired direction from a desired viewpoint position, but what is presented is always a still image. Of course, Google's "Street View" or the like is capable of moving a viewpoint position along a street, but the viewpoint position is limited to specific points discretely set on the street, and therefore, what is presented to a user is merely a plurality of still images viewed from discrete viewpoints.

Thus, even if an image display using omnidirectional images is performed, this cannot give the user a satisfactory sense of presence as long as the displayed images are still images. From the user's standpoint, he/she is always merely viewing still images shot from specific viewpoints, and cannot enjoy a sense of presence that "he/she is actuality present in that view."

### SUMMARY OF THE INVENTION

It is therefore an object of the present invention to provide a free viewpoint video display apparatus capable of presenting as a moving image a field of vision in any direction viewed from a viewpoint moving along a predetermined route to give a user a high sense of presence.
(1) The first feature of the present invention resides in a free viewpoint video display apparatus for displaying a field of vision in any direction viewed from a viewpoint moving along a predetermined route, comprising:
   an omnidirectional image storage unit for storing omnidirectional images, in respective frame units, having fields of vision of 360 degrees shot using an omnidirectional camera while moving along the route;
   a route information storage unit for storing route information that includes position information indicating positions of a plurality of nodes constructing the route and connection information indicating a branch for a connection between the nodes;
   a correspondence information storage unit for storing correspondence information indicating correspondence between each individual frame of the omnidirectional images stored in the omnidirectional image storage unit and a node or one point on a branch in the route information stored in the route information storage unit;
   a current position data storage unit for storing current position data indicating a current position on the route;
   a line of sight direction data storage unit for storing line of sight direction data indicating a line of sight direction;
   a data updating unit for performing, based on a user's input operation, a current position update processing for updating the current position data so that the current position moves on the route and a line of sight direction update processing for updating the line of sight direction data so that the line of sight direction changes;
   an image cutout unit for recognizing a current position frame corresponding to a current position indicated by the current position data by making reference to the correspondence information, and reading out an omnidirectional image of the current position frame from the omnidirectional image storage unit, and cutting out, from a read-out omnidirectional image, a field of view image that constructs a field of vision in a line of sight direction indicated by the line of sight direction data;
   a route mapping unit for creating, based on the current position data and the line of sight direction data, a route map on which indices indicating a current position and a line of sight direction are superimposed upon a plan view of the route; and
   an image display unit for displaying side by side the field of view image and the route map.
(2) The second feature of the present invention resides in a free viewpoint video display apparatus having the first feature, wherein:
   the omnidirectional image storage unit stores as an omnidirectional image a rectangular panoramic image that is obtained by cutting out a region having an elevation angle of a predetermined reference value or less from a distorted circular image obtained by shooting a hemispherical field of vision located higher than a predetermined horizontal plane using an omnidirectional camera fitted with a fisheye lens or an omnidirectional mirror and applying thereto distortion correction.
(3) The third feature of the present invention resides in a free viewpoint video display apparatus having the first feature, wherein:
   the omnidirectional image storage unit stores as an omnidirectional image a rectangular panoramic image created by moving a virtual omnidirectional camera along a virtual route made of a three-dimensional CG image.
(4) The fourth feature of the present invention resides in a free viewpoint video display apparatus having any of the first to the third features, wherein:
   the route information storage unit stores route information that includes position information indicating coordinate values of individual nodes on a two-dimensional XY coordinate system and connection information indicating, with regard to combinations of two arbitrary nodes among all the nodes, whether a straight branch for a connection between the two arbitrary nodes of each combination exists, and
   the current position data storage unit stores current position data indicating coordinate values of a current position on the two-dimensional XY coordinate system.
(5) The fifth feature of the present invention resides in a free viewpoint video display apparatus having the fourth feature, wherein:
   the line of sight direction data storage unit stores as line of sight direction data an azimuth angle ϕ (0 degrees ≤ (ϕ < 360 degrees) with respect to a predetermined reference axis of a two-dimensional XY coordinate system, and
   the image cutout unit cuts out, from the read-out omnidirectional image, a field of view image that constructs a field of vision within a range of an azimuth angle ϕ-Δ/2 to ϕ+Δ/2 (provided that Δ denotes a predetermined cutout angle).
(6) The sixth feature of the present invention resides in a free viewpoint video display apparatus having any of the first to the fifth features, wherein:
   the omnidirectional image storage unit stores frame-based images imparted with a series of frame numbers,
   the correspondence information storage unit stores correspondence information for identifying frame numbers of frames corresponding to individual nodes, and
   the image cutout unit, when the current position is a node, recognizes as a current position frame a frame imparted with a frame number corresponding to said node, and when the current position is a midway point on a branch, recognizes as a current position frame a frame imparted with a frame number determined by linear interpolation based on a pair of frame numbers corresponding to a pair of nodes located at both ends of said branch.
(7) The seventh feature of the present invention resides in a free viewpoint video display apparatus having any of the first to the sixth features, wherein:
   the data updating unit comprises a controller including a forward button, a backward button, a left-facing button, and a right-facing button, and
   said data updating unit updates the current position data so that the current position moves at a predetermined speed in a predetermined forward direction on the route while the forward button is pressed, updates the current position data so that the current position moves at a predetermined speed in a direction reverse to the forward direction on the route while the backward button is pressed, updates the line of sight direction data so that the line of sight direction changes toward the left at a predetermined speed while the left-facing button is pressed, and updates the line of sight direction data so that the line of sight direction changes toward the right at a predetermined speed while the right-facing button is pressed.
(8) The eighth feature of the present invention resides in a free viewpoint video display apparatus having the seventh feature, wherein:
   the data updating unit has a function of setting a forward direction vector from a start-point node to an end-point node of a branch including a current position, performs a current position update processing taking a direction indicated by the forward direction vector as a forward direction, and
   temporarily stops the current position update processing when the current position has arrived at any node, allows a user to select a new branch having its start point at an arrival node, sets a new forward direction vector having the arrival node as its start-point node and another end point of the selected new branch as its end-point node, and then resumes the current position update processing.
(9) The ninth feature of the present invention resides in a free viewpoint video display apparatus having the eighth feature, wherein:
   the data updating unit, when the current position has arrived at any node, causes a directional marker indicating a direction of a new branch having its start point at an arrival node to be displayed on a field of view image,
   the controller further includes a marker selection button to perform an operation for selecting a specific directional marker, and
   the data updating unit uses, as a branch selected by the user, a branch corresponding to a directional marker selected by the marker selection button.
(10) The tenth feature of the present invention resides in a free viewpoint video display apparatus having the eighth or the ninth feature, wherein:
   the route information storage unit has stored route information indicating a route constructed by a set of straight branches, and
   the data updating unit performs a processing for updating the line of sight direction data based on an angle θ which is defined as an angle between a first branch and a second branch so that a relative line of sight direction based on a reference of the forward direction vector becomes constant when the user proceeds from the first branch to the second branch.
(11) The eleventh feature of the present invention resides in a non-transitory computer-readable medium storing a program for causing a computer to function as the free viewpoint video display apparatus having any of the first to the tenth features.

In the free viewpoint video display apparatus according to the present invention, a field of vision in any direction viewed from a viewpoint moving along a predetermined route can be presented as a moving image. A user can freely walk around on the route, and can freely change the line of sight direction by an input operation to the data updating unit. Accordingly, it becomes possible to give the user a high sense of presence as if he/she was actually moving along said route. Moreover, because a route map indicating a current position and a line of sight is displayed together with an image according to the current position and the line of sight direction, the user can easily recognize his/her own current position and line of sight direction.

### BRIEF DESCRIPTION OF THE DRAWINGS

Fig. 1 is a block diagram showing a configuration of a free viewpoint video display apparatus according to a basic embodiment of the present invention.
Fig. 2 is a plan view of an art museum to be presented by the apparatus shown in Fig. 1 (the hatching shows wall surfaces).
Fig. 3 is a plan view showing nodes and branches that construct a visitor route of the art museum shown in Fig. 2.
Fig. 4 is a plan view showing an example in which the nodes and branches shown in Fig. 3 are plotted on two-dimensional XY coordinates.
Fig. 5 is a view showing an example of route information R to be stored in a route information storage unit 130 in the apparatus shown in Fig. 1.
Fig. 6 is a view showing in a real format the information R shown in Fig. 5.
Fig. 7 is a side view showing an example of a shooting device for an omnidirectional image to be stored in an omnidirectional image storage unit 110 shown in Fig. 1.
Fig. 8 is a plan view of a distorted circular image shot using the shooting device shown in Fig. 7.
Fig. 9 is a plan view showing an example of a rectangular panoramic image (an omnidirectional image) created based on a distorted circular image shot using the shooting device shown in Fig. 7.
Fig. 10 is a view showing roles of correspondence information to be stored in the correspondence information storage unit 120 in the apparatus shown in Fig. 1.
Fig. 11 is a plan view showing a linear interpolation process for determining a corresponding frame with regard to a midway point on a branch.
Fig. 12 is a view showing an example of correspondence information C to be stored in the correspondence information storage unit 120 in the apparatus shown in Fig. 1.
Fig. 13 is a view showing in a real format the correspondence information C shown in Fig. 12.
Fig. 14 is a plan view showing an example in which a current position P and a line of sight direction ϕ (azimuth angle) are defined on the route of Fig. 3.
Fig. 15 is a plan view showing an operation to cut out a field of view image Q (P, ϕ) corresponding to a line of sight direction of an azimuth angle ϕ = 90 degrees from a frame F0452 corresponding to the current position P shown in Fig. 14.
Fig. 16 is a plan view showing an example of an image displayed by an image display unit 190 in the apparatus shown in Fig. 1.
Fig. 17 is an enlarged view of an index I indicating a current position and an index J indicating a line of sight direction in the image shown in Fig. 16.
Fig. 18 is a top view of a controller being a component of a data updating unit 170 in the apparatus shown in Fig. 1.
Fig. 19 is a plan view showing a state of movement from a node N5 to a node N2 on the route of Fig. 3.
Fig. 20 is a plan view showing a state where directional markers are displayed in a field of view image display area G2 when the current position has arrived at the node N2 shown in Fig. 19 (a field of view image itself in G2 is omitted and is not illustrated).
Fig. 21 is a view showing an example of setting change of a forward direction vector that is retained by a data updating unit 170 in the apparatus shown in Fig. 1.
Fig. 22 is a plan view showing a working example for updating the line of sight direction as well as a setting change in the forward direction vector.

### DESCRIPTION OF THE PREFERRED EMBODIMENTS

Hereinafter, the present invention will be described based on illustrated embodiments.

### <Section 1. Configuration of Apparatus According to Basic Embodiment>

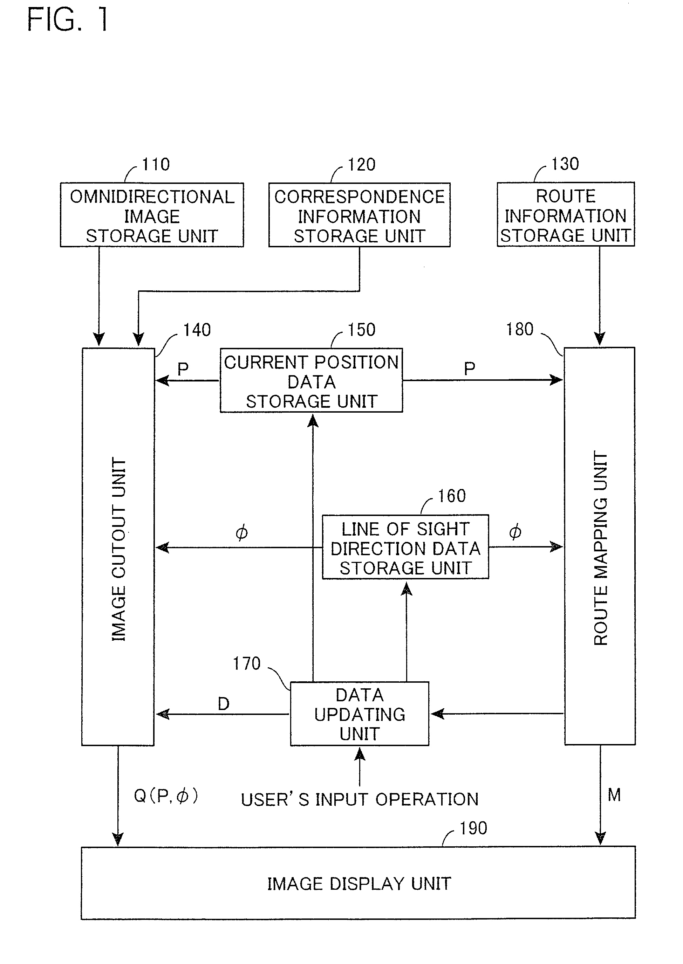

Fig. 1 is a block diagram showing a configuration of a free viewpoint video display apparatus according to a basic embodiment of the present invention. As illustrated, this apparatus is composed of an omnidirectional image storage unit 110 for storing an omnidirectional image, a correspondence information storage unit 120 for storing correspondence information, a route information storage unit 130 for storing route information, an image cutout unit 140 for cutting out a field of view image from an omnidirectional image, a current position data storage unit 150 for storing current position data, a line of sight direction data storage unit 160 for storing line of sight direction data, a data updating unit 170 for updating current position data and line of sight direction data, a route mapping unit 180 for creating a route map, and an image display unit 190 for displaying a field of view image and a route map.

In actuality, these respective structural elements can be constructed by using a computer and its peripheral equipment. That is, the respective storage units 110, 120, 130, 150, 160 can be constructed by a storage device such as a memory and disk drive for a computer, the image cutout unit 140 and the route mapping unit 180 can be constructed by a computer processor that operates based on a predetermined program, the data updating unit 170 can be constructed by an input device for a computer including said processor and a user interface, and the image display unit 190 can be constructed by a display device for a computer and its control device. Therefore, practically, this free viewpoint video display apparatus is constructed by installing a predetermined program in computer equipment.

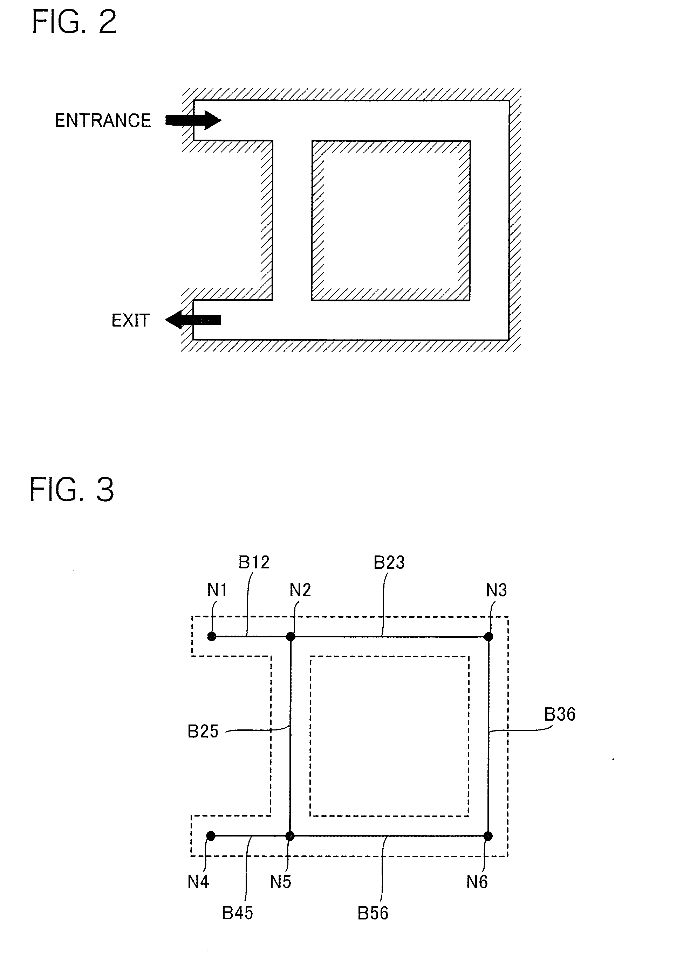

This apparatus is an apparatus having a function of displaying a field of vision in any direction viewed from a viewpoint moving along a predetermined route, and the route to be displayed may be either outdoors or indoors. Therefore, this apparatus is capable of presenting on a display screen views of various historical sites or tourist spots to allow a user to experience as if he/she was freely walking around while touring the grounds of said historical site or tourist spot. In the following description, for the sake of convenience, the function of the above-described respective structural elements will be described with regard to a simple example of presenting the inside of an art museum with a floor layout shown by a plan view as shown in Fig. 2 to a user.

Here, suppose that the art museum shown in Fig. 2 is an existing facility for exhibiting paintings and sculptures, and as illustrated, a visitor who has been admitted to the art museum from the entrance walks freely around corridors inside while appreciating the exhibits, and exits the art museum from the exit. The parts hatched in Fig. 2 indicate wall surfaces of the corridor, and it is assumed that the paintings are on display on the wall surfaces. Moreover, it is assumed that there are sculptures placed on the floors of the corridors as appropriate. The free viewpoint video display apparatus shown in Fig. 1, which basically serves as an apparatus for presenting images obtained by shooting images of the inside of the existing art museum to a user, has a function of simulating a state in which the user walks freely around the inside of the art museum while observing by directing his/her line of sight in any direction and presenting the same as a moving image.

Accordingly, in the present invention, a route of a facility to be presented is represented by nodes and branches, and handled as route information. Fig. 3 is a plan view showing nodes and branches that construct a visitor route of the art museum shown in Fig. 2, in which the individual black dots show nodes, the individual straight lines show branches, and the individual broken lines show outlines of an actual route. As illustrated, in this example, six nodes N1 to N6 and six branches B12 to B56 are defined. Each branch is a unit route that connects two nodes, and here, for the sake of convenience, the branch to connect nodes Ni and Nj is denoted by a reference sign of branch Bij. For example, the branch B12 is a unit route that connects the nodes N1 and N2.

At which positions on a route to define nodes and between which nodes to define a branch is left to the judgment of a designer of this apparatus, but generally, it suffices to define nodes at branch points, corners, and end points of the route, and define a branch(es) in a necessary node section(s) according to its actual route. In the case of the illustrated example, all of the branches form straight lines, but when an existing route includes a curved line, a branch formed of a curved line may be defined. However, if a branch is of a straight line, only specifying nodes at both end points thereof also specifies said branch, and therefore, practically, it is preferable to construct all branches by straight lines. When an existing route includes a curved line, it suffices to approximate by simulation the curved line by a polygonal line consisting of a plurality of nodes and straight lines to connect these.

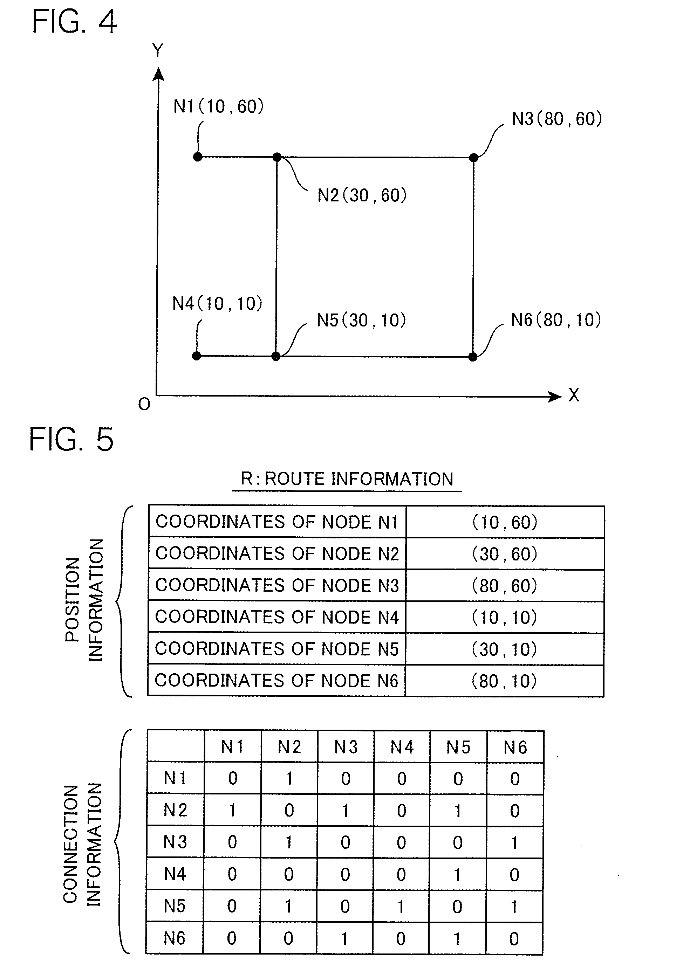

Here, information that includes position information indicating the positions of a plurality of nodes that construct a route and connection information indicating a branch(es) for a connection(s) between these nodes will be referred to as route information R. The route information storage unit 130 in the apparatus shown in Fig. 1 is a structural element for storing such route information. Actually, the position information of the nodes is given as coordinate values. Fig. 4 is a plan view showing an example in which the nodes and branches shown in Fig. 3 are plotted on two-dimensional XY coordinates. The pair of coordinates noted in parentheses along with the reference sign of each of the nodes N1 to N6 are X- and Y-coordinate values of the node concerned. For example, N1(10, 60) indicates that the position coordinates of the node N1 are (10, 60).

Fig. 5 is a view showing route information R about the specific route shown in Fig. 4. This route information R includes position information indicating the positions of a plurality of nodes N1 to N6 that construct the route and connection information indicating branches for connections between these nodes. In the case of the illustrated example, the position information consists of information indicating coordinate values of individual nodes on a two-dimensional XY coordinate system. That is, the position information shown in the upper part of Fig. 5 shows XY-coordinate values of the respective nodes N1 to N6 of Fig. 4.

On the other hand, the connection information consists of information indicating, with regard to combinations of two arbitrary nodes among all nodes, whether a straight branch for a connection between the two nodes of each combination exists. For example, the connection information shown in the lower part of Fig. 5, for which a set of six nodes N1 to N6 is provided laterally and a set of six nodes N1 to N6 is provided longitudinally as well, has a matrix with a total of 36 elements in which each of digits "0" or "1" is described. Here, "0" denotes that a straight branch for a connection between the two nodes does not exist with regard to the combination thereof concerned, and "1" denotes that such a straight branch exists.

For example, on the first line, there is a description of the set of digits of "010000," and this indicates that a straight branch B12 for a connection between nodes "N1-N2" exists with regard to the combination thereof, while a straight branch for a connection between the nodes "N1-N1," "N1-N3," "N1-N4," "N1-N5," or "N1-N6" does not exist with regard to each of the combinations thereof. Here, diagonal elements of the matrix indicate combinations of the same nodes, and are therefore always denoted with "0." It will be easily understood by reference to the connection relationship of the nodes via branches in the route shown in Fig. 4 that the connection information shown in the lower part of Fig. 5 indicates the route of Fig. 4.

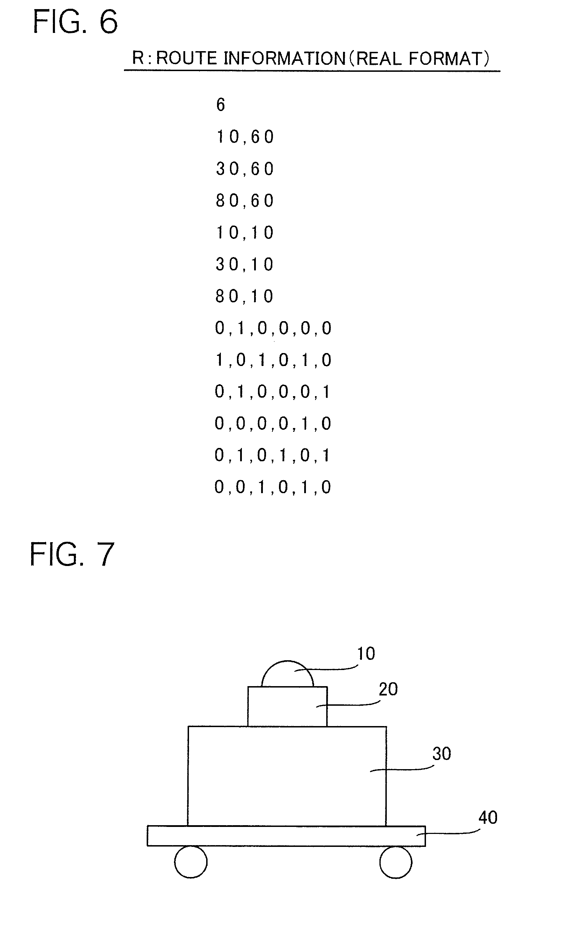

The route information storage unit 130 in the apparatus shown in Fig. 1 has a function of storing the route information R as shown in Fig. 5. That is, the route information storage unit 130 is a structural element for storing route information R that includes position information indicating the positions of a plurality of nodes that construct a route and connection information indicating a branch(es) for a connection(s) between these nodes. Also, the route information R shown in Fig. 5 is added with redundant information for convenience of description. In actuality, the route information storage unit 130 stores route information R described in a real format as shown in Fig. 6.

The route information R shown in Fig. 6 substantially indicates the same content as that of the route information R shown in Fig. 5. That is, the number "6" on the first line indicates the total number of nodes, the following second to seventh lines indicate only the part of coordinate values shown in the upper part of Fig. 5, and the following eighth to thirteenth lines indicate only the part of elements of the matrix shown in the lower part of Fig. 5. Of course, the real format shown in Fig. 6 shows an example, and various other formats can also be adopted as a real format of the route information R.

On the other hand, the omnidirectional image storage unit 110 in the apparatus shown in Fig. 1 stores omnidirectional images in frame units, each frame having a field of vision of 360 degrees shot at a position using an omnidirectional camera while moving along the visitor route of the art museum shown in Fig. 2. In creating such omnidirectional images, the order of performing shooting is arbitrary if images shot along all branches are obtained.

Fig. 7 is a side view showing an example of a shooting device for such omnidirectional images. This shooting device is, as illustrated, composed of a fisheye lens 10, a video camera 20, a data processing unit 30, and a carriage 40, and functions as an omnidirectional camera capable of shooting an image having a field of vision of 360 degrees. As shown in Fig. 7, the fisheye lens 10 is disposed at an uppermost portion of this device, and forms on an imaging plane of the video camera 20 an image of a hemispherical field of vision located higher than a predetermined horizontal plane. When such a configuration is adopted, a distorted circular image as shown in Fig.

8 is formed on the imaging plane of the video camera 20 (both of the hatched doughnut-shaped part and the circular part with a white background compose a distorted circular image shot with the fisheye lens 10). The zenith point H at a center of the distorted circular image corresponds to a point present at a position vertically above the shooting device shown in Fig. 7 (equivalent to the corridor ceiling), and the outer periphery of the distorted circular image corresponds to the lower end position of a shooting field of view (a 360-degree field of view) by the shooting device shown in Fig. 7.

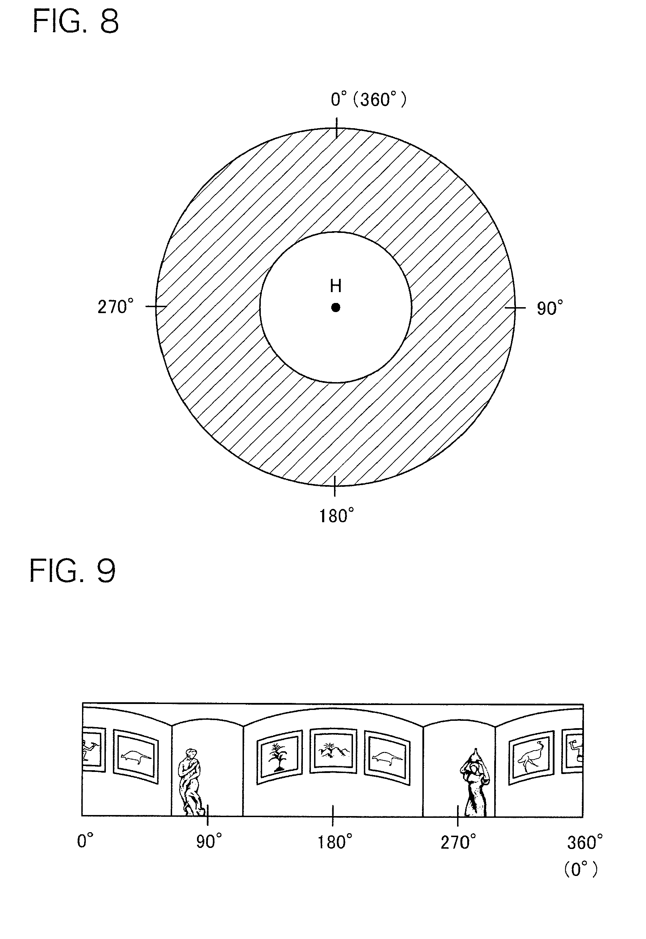

In the case of the working example shown here, because the inside of an art museum in which paintings and sculptures are on display is to be displayed, an image of the circular part with a white background present in the vicinity of the zenith point H (equivalent to an image of a ceiling part of the corridor) will not be used, but only the doughnut-shaped region hatched in the figure will be used. Fig. 9 is a plan view showing a rectangular panoramic image that is obtained by cutting out a region having an elevation angle of a predetermined reference value or less (the region hatched in the figure) from the distorted circular image shown in Fig. 8 and applying thereto distortion correction. The azimuth angles of 0 degrees to 360 degrees shown at the lower side of the panoramic image correspond to azimuth angles of 0 degrees to 360 degrees shown on the circumference of the distorted circular image of Fig. 8. That is, the panoramic image shown in Fig. 9 is an image resulting from placing a viewpoint at the position of the fisheye lens 10 shown in Fig. 7 and viewing 360 degrees.

Data of the distorted circular image shot by the video camera 20 is sent to the data processing unit 30. The data processing unit 30 is constructed by a computer, and the distorted circular image data is stored in its hard disk drive. Moreover, in the case of the working example shown here, the data processing unit 30 has a function of performing a processing for creating a panoramic image from the distorted circular image. Therefore, the distorted circular image as shown in Fig. 8 is converted to a panoramic image as shown in Fig. 9 in the data processing unit 30, and stored in the hard disk drive. In the case of the working example shown here, the panoramic image thus obtained is used as an omnidirectional image.

The distorted circular image shown in Fig. 8 is a distorted doughnut-shaped image, whereas the panoramic image shown in Fig. 9 is a rectangular image, and therefore, the data processing unit 30 needs to perform an image conversion processing including distortion correction. Because such image conversion processing is a publicly known technique, detailed description thereof will be omitted here. Also, normally, it is difficult to completely eliminate distortion even by performing such image conversion processing including distortion correction, so that a slight distortion remains in an obtained panoramic image, but distortion correction to a level not to cause a problem in practical use is possible.

In the above, a description has been given of the procedure of installing the shooting device shown in Fig. 7 at one point on a route, and obtaining a panoramic image therearound, but by moving this shooting device along a predetermined route while performing moving image shooting by the video camera 20, moving image data composed of a plurality of continuous frames is obtained with the panoramic image (omnidirectional image) as shown in Fig. 9 regarded as one frame. The omnidirectional image storage unit 110 in the apparatus shown in Fig. 1 stores panoramic images in frame units which are shot using the above-described omnidirectional camera while moving along the visitor route.

As mentioned above, the order of performing shooting is arbitrary if images shot along all branches are obtained, but here, for convenience of description, suppose that the carriage 40 has been moved at a constant speed, on the route shown in Fig. 3, in an order of node N1 to node N2 (branch B12), node N2 to node N3 (branch B23), node N3 to node N6 (branch B36), node N6 to node N5 (branch B56), node N5 to node N4 (branch B45), and node N2 to node N5 (branch B25) while shooting is performed to obtain movie information comprising a total of 2401 panoramic images (omnidirectional images) denoted with a series of frame numbers F0000 to F2400.

The omnidirectional image storage unit 110 has stored in frame units such a total of 2401 panoramic images, and the image cutout unit 140 can read out a single panoramic image imparted with an arbitrary frame number. These 2401 panoramic images are equal to omnidirectional images shot at specific points on the route, respectively, and made to correspond to the specific points, respectively. Correspondence information stored in the correspondence information storage unit 120 is information indicating such correspondence.

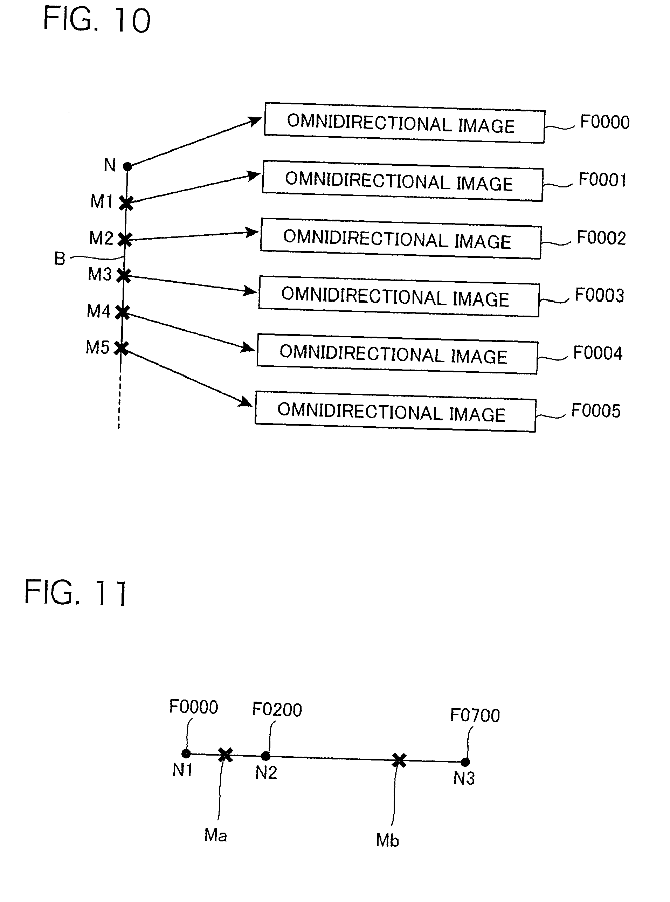

For example, as shown in Fig. 10, if it is assumed that the shooting device shown in Fig. 7 is moved along a branch B extending downward from a node N while shooting is performed, as illustrated, panoramic images (omnidirectional images) shot at the respective positions are obtained as frames, such as a frame F0000 at the node N, a frame F0001 at a midway point M1, a frame F0002 at a midway point M2, a frame F0003 at a midway point M3... By moving the carriage 40 at a constant speed, frames of panoramic images are made to correspond with regard to individual points defined at equal intervals on a branch, respectively.

Here, the distance between a midway point Mi at which an i-th frame Fi has been shot and a midway point M(i+1) at which an (i+1)-th frame F(i+1) has been shot is determined according to the frame shooting interval of the video camera 20 and the moving speed of the carriage 40. For example, by shooting at a shooting interval of 30 frames a second (which suffices with a shooting interval at which frames can be perceived by the human eye as a moving image), 30 frames of panoramic images are made to correspond to a distance by which the carriage 40 advances in a second.

Consequently, the correspondence information to be stored in the correspondence information storage unit 120 is information indicating the correspondence between each individual frame F0000, F0001, F0002, F0003, ... of panoramic images (omnidirectional images) stored in the omnidirectional image storage unit 110 and a "node" or "one point on a branch" in the route information R stored in the route information storage unit 130. That is, in principle, when the omnidirectional image storage unit 110 has stored a total of 2401 frames of frames F0000 to F2400, information for making a "node" or "one point on a branch" on the route correspond to each of these frames is prepared as correspondence information.

In the case of the working example shown here, the carriage 40 is moved at a constant speed while omnidirectional images are shot, and therefore, the correspondence information storage unit 120 stores only correspondence information for identifying the frame numbers of frames corresponding to the individual nodes, and the frame numbers of frames corresponding to midway points between the nodes are determined by linear interpolation.

Fig. 11 is a plan view showing a linear interpolation process for determining a corresponding frame with regard to a midway point on a branch. In this example, three nodes N1, N2, N3, a branch for a connection between the nodes N1 and N2, and a branch for a connection between the nodes N2 and N3 are shown. Here, suppose that a total of 701 omnidirectional images of frame F0000 to F0700 have been obtained by moving the carriage 40 from the node N1 through the node N2 up to the node N3 at a uniform speed, a shot image corresponding to the node N1 has been frame F0000, a shot image corresponding to the node N2 has been frame F0200, and a shot image corresponding to the node N3 has been frame F0700.

In this case, as correspondence information, it is sufficient to prepare information indicating that the frame numbers F0000, F0200, F0700 correspond to the three nodes N1, N2, N3, respectively. Then, the frame number corresponding to the illustrated midway point Ma can be determined by linear interpolation based on a pair of frame numbers F0000, F0200 corresponding to a pair of nodes N1, N2 located at both ends of a branch on which the midway point Ma is present, and the frame number corresponding to the illustrated midway point Mb can be determined by linear interpolation based on a pair of frame numbers F0200, F0700 corresponding to a pair of nodes N2, N3 located at both ends of a branch on which the midway point Mb is present.

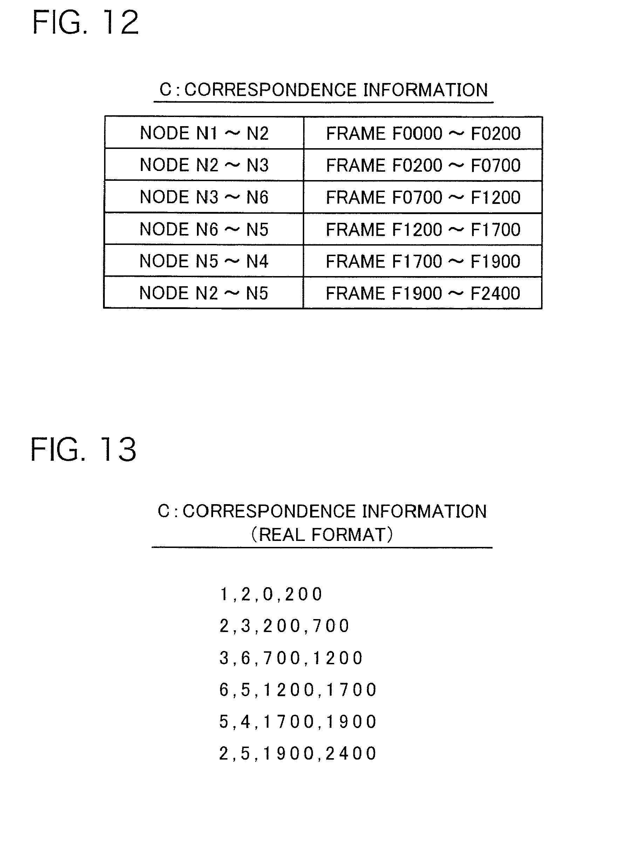

Fig. 12 is a view showing, with regard to a total of 2401 frames of frames F0000 to F2400 shot for the specific route shown in Fig. 3, an example of correspondence information C to be stored in the correspondence information storage unit 120, and indicates that the frame numbers shown in the right column correspond to a branch between each pair of nodes shown in the left column. For example, on the first line, it is indicated that a total of 201 omnidirectional images of frames F0000 to F0200 correspond to a branch B21 between the nodes N1 and N2. The correspondence information C shown in Fig. 12, substantially, merely indicates the frame numbers made to correspond to the nodes at both end points of each of the six branches B12, B23, B36, B56, B45, B25, so that the amount of information is considerably saved as compared with when preparing correspondence information for which corresponding points are defined for all of the total of 2401 frames.

Fig. 13 is a view showing the correspondence information C shown in Fig. 12 in a real format, for each line of which, two numbers respectively indicating node numbers and two numbers respectively indicating frame numbers are lined. For example, "1, 2, 0, 200" on the first line corresponds to the information on the first line in the table of Fig. 12, and indicates that the frame numbers F0000 to F0200 correspond to the branch between the nodes N1 and N2. In actuality, the correspondence information storage unit 120 stores correspondence information C described in a real format as shown in Fig. 13. Of course, the real format shown in Fig. 13 shows an example, and various other formats can also be adopted as a real format of the correspondence information C.

### <Section 2. Operation of Apparatus According to Basic Embodiment>

Next, the operation of the free viewpoint video display apparatus shown in Fig. 1 will be described. As described in Section 1, the current position data storage unit 150 stores current position data indicating a current position on a route, and the line of sight direction data storage unit 160 stores line of sight direction data indicating a line of sight direction. Here, the "current position" indicates a virtual position on the route with regard to a user who receives a video display by this video display apparatus, and the "line of sight direction" indicates a virtual line of sight direction of the user present at the virtual position. In the initial state, it suffices, for example, to have set the "current position" to the position of the node N1 in Fig. 3 and set the "line of sight direction" to the right direction of the figure.

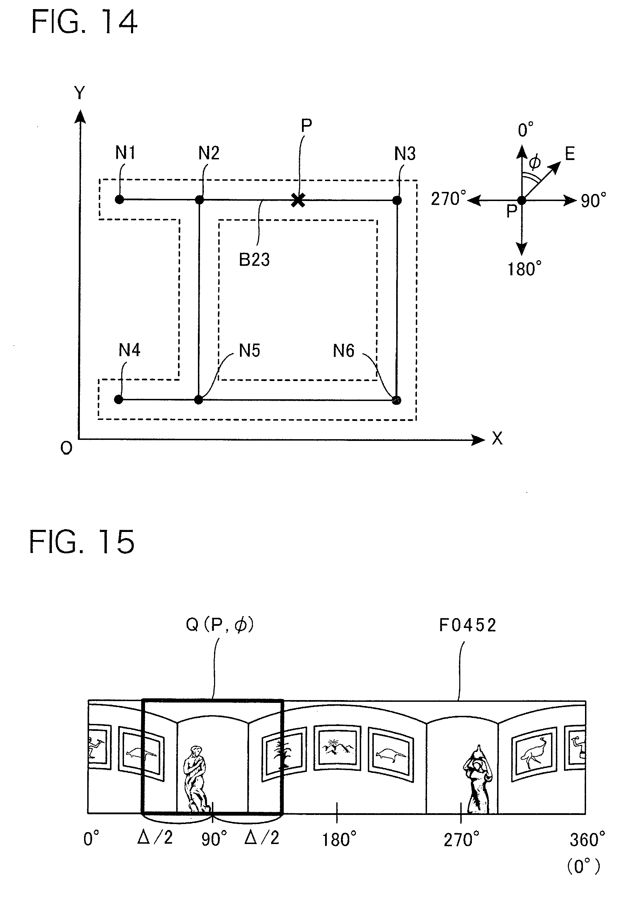

Fig. 14 is a plan view showing an example in which a current position P and a line of sight direction ϕ (azimuth angle) are defined on the route of Fig. 3. In this example, the current position P is defined at a midway point on the branch B23 for a connection between the nodes N2 and N3, and can be expressed as XY-coordinate values P(x, y). Therefore, in the case of the working example shown here, in the current position data storage unit 150, data indicating the XY-coordinate values P(x, y) of the current position P on a two-dimensional XY coordinate system is stored as current position data.

On the other hand, in the case of this working example, the line of sight direction (sight vector E) is expressed by an azimuth angle ϕ as shown in the upper right part of Fig. 14. That is, in the case of this example, a reference axis directed in a positive Y-axis direction is set on the current position P, and an angle with respect to the reference axis is defined as an azimuth angle ϕ (0 degrees ≤ ϕ < 360 degrees) and used as a parameter indicating a line of sight direction. Therefore, in the case of the working example shown here, in the line of sight direction data storage unit 160, an azimuth angle ϕ (0 degrees ≤ ϕ < 360 degrees) with respect to a predetermined reference axis (an axis directed in a positive Y-axis direction) of a two-dimensional XY coordinate system is stored as line of sight direction data.

The azimuth angle ϕ is a parameter indicating in which direction the virtual user present at the current position P has his/her line of sight (sight vector E) directed. In the case of the example shown in Fig. 14, the user has his/her line of sight directed in a positive Y-axis direction when ϕ = 0 degrees, the user has his/her line of sight directed in a positive X-axis direction when ϕ = 90 degrees, the user has his/her line of sight directed in a negative Y-axis direction when ϕ = 180 degrees, and the user has his/her line of sight directed in a negative X-axis direction when ϕ = 270 degrees.

Thus, if the current position P and the line of sight direction (azimuth angle) ϕ are determined, a field of view image Q (P, ϕ) in a state of viewing in the direction of the azimuth angle ϕ from the current position P can be cut out by the image cutout unit 140. That is, the image cutout unit 140 first recognizes a current position frame corresponding to the current position P indicated by the current position data by making reference to the correspondence information C, and reads out an omnidirectional image of the current position frame from the omnidirectional image storage unit 110.

In the case of the working example shown here, the correspondence information storage unit 120 has stored the correspondence information C for identifying the frame numbers of frames corresponding to the individual nodes. Therefore, the image cutout unit 140, when the current position P is present on a node, can recognize as the current position frame a frame imparted with a frame number corresponding to said node. In contrast, when the current position P is a midway point on a branch, the image cutout unit 140 recognizes as the current position frame a frame imparted with a frame number determined, as described in terms of Fig. 11, by linear interpolation based on a pair of frame numbers corresponding to a pair of nodes located at both ends of said branch.

Of course, the respective frames that construct omnidirectional images are images shot at discrete shooting points on the route, and the current position P is not always coincident with any of these discrete shooting points. Therefore, in actuality, it suffices for the image cutout unit 140 to read out a frame made to correspond to a point closest to the current position P.

The frame F0452 shown in Fig. 15 is a plan view showing an example of the omnidirectional image thus read out by the image cutout unit 140. This omnidirectional image is a frame corresponding to the current position P (a substantially middle point on the branch B23) shown in Fig. 14, and equal to a panoramic image to be observed when the visual user present at the current position P looked around the surroundings one time. The image cutout unit 140 performs a processing for cutting out, from the read-out omnidirectional image, a field of view image that constructs a field of vision in a line of sight direction indicated by the line of sight direction data ϕ.

The field of view image Q (P, ϕ) shown enclosed with thick lines in Fig. 15 shows an image that is cut out at an azimuth angle ϕ = 90 degrees, that is, when the virtual user present at the current position P shown in Fig. 14 has his/her line of sight directed in the positive X-axis direction. It suffices for the image cutout unit 140 to perform a processing for cutting out, from the read-out omnidirectional image (frame F0452), a field of view image that constructs a field of vision within a range of an azimuth angle ϕ-Δ/2 to ϕ+Δ/2. Here, Δ denotes a predetermined cutout angle, which is an angle equivalent to the lateral width of a cut-out field of view image Q. In the case of the illustrated example, because of the setting of an azimuth angle ϕ = 90 degrees, a field of view image equivalent to the lateral width Δ has been cut out on both sides of a position of ϕ = 90 degrees.

Thus, the current position data P stored in the current position data storage unit 150 and the line of sight direction data (azimuth angle ϕ) stored in the line of sight direction data storage unit 160 play an important role in determining the content of the field of view image Q (P, ϕ). Further, these data P and ϕ are to be appropriately updated by the data updating unit 170. That is, the data updating unit 170 has a function of performing, based on a user's input operation, a current position update processing for updating the current position data so that the current position P moves on the route and a line of sight direction update processing for updating the line of sight direction data so that the line of sight direction changes.

For example, if a current position update processing is performed in the example shown in Fig. 14 such that the X-coordinate value of the current position P gradually increases, the current position P then moves in the right direction of the figure on the branch B23, and a field of view image in such a movement is presented to the user. That is, the frame of an omnidirectional image to be read out from the omnidirectional image storage unit 110 by the image cutout unit 140 changes in a manner of F0452, F0453, F0454, ... Moreover, if a line of sight update processing is performed in the example shown in Fig. 14 such that the azimuth angle ϕ gradually increases, the line of sight direction of the virtual user present at the current position P then turns clockwise, so that the cutout frame shown by thick lines in Fig. 15 moves in the right direction of the figure.

On the other hand, the route mapping unit 180 has a function of creating, based on the current position data P and the line of sight direction data (azimuth angle) ϕ, a route map M on which indices indicating a current position and a line of sight direction are superimposed upon a plan view of the route. Because a plan view of the route can be created based on the route information R stored in the route information storage unit 130, by performing a processing for superimposing thereon indices indicating a current position and a line of sight direction, a route map M can be created. Also, a plan view of the route may be created in the route information storage unit 130 as image data in advance.

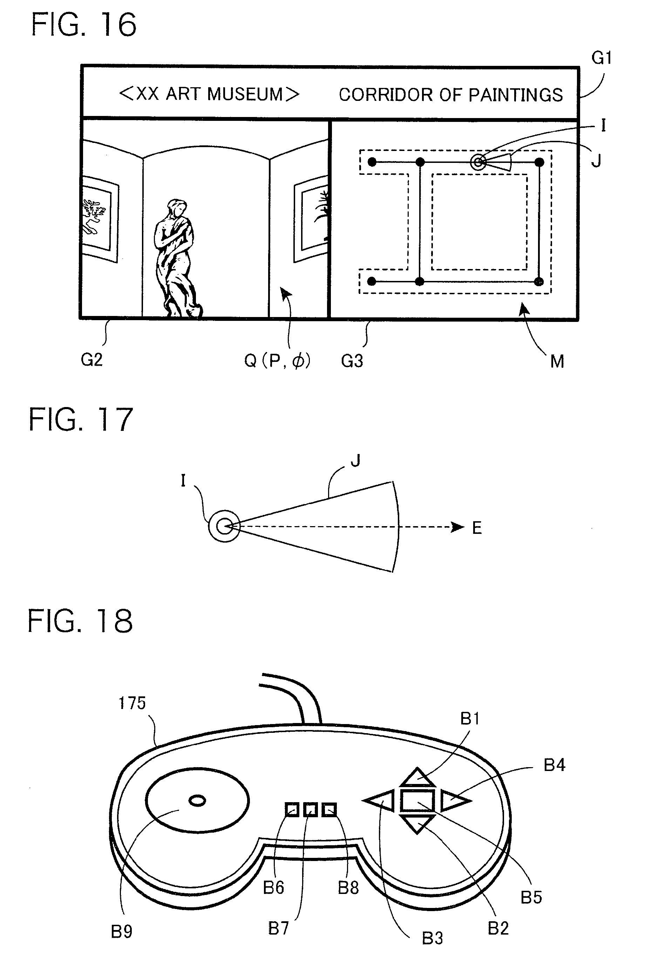

The image display unit 190 has a function of displaying side by side on a display screen the field of view image Q (P, ϕ) cut out by the image cutout unit 140 and the route map M created by the route mapping unit 180. Fig. 16 is a plan view showing an example of an image displayed by the image display unit 190. In the case of this example, the displayed image is composed of three areas of a title display area G1, a field of view image display area G2, and a route map display area G3. In the title display area G1, there is a display of title characters of "<XX ART MUSEUM>" and "Corridor of Paintings," whereby the name of a facility that is currently displayed is specified. Further, in the field of view image display area G2, there is a display of the field of view image Q (P, ϕ) cut out by the image cutout unit 140, and in the route map display area G3, there is a display of the route map M created by the route mapping unit 180.

As mentioned above, the route map M is a map on which indices indicating a current position and a line of sight direction are superimposed upon a plan view of the route. In the case of the example shown in Fig. 16, there is drawn a double circle as a current position index I, and there is drawn a fan as a line of sight direction index J. Fig. 17 is an enlarged view of the current position index I and the line of sight direction index J in the image shown in Fig. 16. The current position index I indicates the position on the route of the virtual user, and the line of sight direction index J shows the direction of a user's field of view. The arrow E shown by a dashed line in Fig. 17 is a line of sight direction vector, which directly indicates the line of sight direction of a virtual user. The line of sight direction index J is a fan-shaped pattern having the line of sight vector E as its center line, and roughly indicates a region of a virtual user's field of view. Of course, the modes of the current position index I and the line of sight direction index J are not limited to the illustrated modes, and practically, it is preferable to display these indices in a color different from that of the plan view of the route according to necessity.

As shown in Fig. 16, because the field of view image Q (P, ϕ) on the field of view image display area G2 and the route map M on the route map display area G3 are displayed side by side on the same screen, the user can intuitively recognize at which position on the route map M and in which direction he/she is currently standing, and can grasp which position and in which direction the currently displayed field of view image Q (P, ϕ) has been obtained by viewing. Furthermore, the user, by giving a desired operational input to the data updating unit 170, can update the current position so that the current position P moves on the route and can update the line of sight direction so that the line of sight direction changes. Therefore, the user can simulate as if he/she was walking on a virtual route while observing in a desired direction.

In the case of the example shown here, the user can walk freely around the corridor of the existing art museum shown in Fig. 2 while viewing the field of view image Q (P, ϕ) presented as a moving image on the field of view image display area G2 to appreciate by simulation the paintings and sculptures. Furthermore, the user can confirm his/her current position and line of sight direction by the route map M on the route map display area G3. Thus, the free viewpoint video display apparatus can present as a moving image a field of vision in any direction viewed from a viewpoint moving along a predetermined route to give a user a high sense of presence.

### <Section 3. Specific Configuration Example of Data Updating Unit>

Here, description will be given of a specific configuration example of the data updating unit 170. In the case of the example to be described here, the data updating unit 170 is composed of a controller 175 as exemplified in Fig. 18 and a computer for controlling the controller. The controller 175 is an ordinary device that has been used as input equipment for computer games, and is provided with five buttons B1 to B5 on the right side, three buttons B6 to B8 in the middle, and one button B9 on the left side.

The role of the data updating unit 170 is to perform a current position update processing and a line of sight direction update processing based on a user's input operation, and the controller 175 has a function of accepting an input operation for performing these update processings. Specifically, of the illustrated buttons, the button B1 functions as a forward button, the button B2 functions as a backward button, the button B3 functions as a left-facing button, and the button B4 functions as a right-facing button.

Here, the forward button B1 and the backward button B2 are used for an input operation of a current position update processing, and while the forward button B1 is pressed, update of the current position data is performed so that the current position moves at a predetermined speed in a predetermined forward direction on the route, and while the backward button B2 is pressed, update of the current position data is performed so that the current position moves at a predetermined speed in a direction reverse to the forward direction on the route. The data updating unit 170 detects whether the button B1 or B2 is being pressed, and performs a processing for updating the current position data stored in the current position data storage unit 150 if the button B1 or B2 is being pressed. For example, when the forward direction on the route has been set to a positive X-axis direction, the data updating unit 170 performs an update to increase the X-coordinate value of the current position P (x, y) at a predetermined speed while the forward button B1 is pressed, and performs an update to reduce the X-coordinate value of the current position P (x, y) at a predetermined speed while the backward button B2 is pressed.

On the other hand, the left-facing button B3 and the right-facing button B4 are used for an input operation of a line of sight direction update processing, and while the left-facing button B3 is pressed, update of the line of sight direction data is performed so that the line of sight direction changes toward the left at a predetermined speed, and while the right-facing button B4 is pressed, update of the line of sight direction data is performed so that the line of sight direction changes toward the right at a predetermined speed. The data updating unit 170 detects whether the button B3 or B4 is being pressed, and performs a processing for updating the line of sight direction data stored in the line of sight direction data storage unit 160 if the button B3 or B4 is being pressed. For example, when the azimuth angle ϕ indicating a line of sight direction has been set to 90 degrees, the data updating unit 170 performs a processing to reduce the azimuth angle ϕ to 89 degrees, 88 degrees, 87 degrees, ... while the button B3 is pressed, and performs a processing to increase the azimuth angle ϕ to 91 degrees, 92 degrees, 93 degrees, ... (a processing to increase the azimuth angle ϕ from 0 degrees when it has reached 360 degrees) while the button B4 is pressed.

Thus, the user, by operating the buttons B1 to B4, can walk freely around the inside of a virtual space that constitutes the art museum corridor, and direct his/her line of sight in any direction. For example, in the example shown in Fig. 16, when the forward direction has been set to a positive X-axis direction, if the forward button B1 is continuously pressed, the current position P moves at a predetermined speed in the right direction on the route map M in the display area G3, and if the backward button B2 is continuously pressed, the current position P moves at a predetermined speed in the left direction on the route map M. Therefore, in the display area G2, a moving video image of the field of view image Q (P, ϕ) showing a forward and backward movement state is displayed. Moreover, if the left-facing button B3 is continuously pressed, the line of sight direction index J on the route map M turns counterclockwise, and if the right-facing button B4 is continuously pressed, the line of sight direction index J turns clockwise. Therefore, in the display area G2, a moving video image of the field of view image Q (P, ϕ) showing a state of facing to the left and facing to the right is displayed.

Of course, if the user releases a finger from each button, the user's motions in the virtual space stop, and the field of view image Q (P, ϕ) being a still image is displayed in the display area G2, so that the user can slowly appreciate the paintings and sculptures. Thus, using the free viewpoint video display apparatus allows the user to have an experience with an extremely high sense of presence despite being in the virtual space.

Also, because the changing speed for the current position P or the line of sight direction (azimuth angle ϕ) corresponds to a user's motion speed in the virtual space, it suffices to set an appropriate speed in advance. For example, in the case of the working example shown here, because this apparatus is for providing an experience to appreciate the exhibits walking around an art museum corridor for appreciation, it suffices to set the changing speed for the current position P to a level of speed when walking slowly inside the virtual space and set the changing speed for the azimuth angle ϕ to a level of speed at which the virtual user slowly turns his/her head. Of course, the changing speed may be made variable according to a user's operation, such that continuously pressing each button after clicking n times causes switching to an n-times-speed-mode.

Meanwhile, in the case of the working example shown here, the forward button B1 serves as a button to provide an instruction for proceeding in a predetermined forward direction, and the backward button B2 serves as a button to provide an instruction for proceeding in a direction reverse to said forward direction, and the term "forward direction" here is different from a "line of sight direction." The user moves along a branch in the virtual space, and the term "forward direction" here means either one direction to move along the branch along which he/she is moving. For example, in the case of the example shown in Fig. 14, the current position P is located on the branch B23, and the user is moving along the branch B23. In this case, the "forward direction" is set to either of the direction directing from the node N2 to the node N3 and the direction directing from the node N3 to the node N2, conversely.

Therefore, in the working example shown here, the data updating unit 170 is made to have a function of setting a forward direction vector so as to allow recognizing the current "forward direction." The forward direction vector is a vector from a start-point node to an end-point node of a branch including the current position P, and for example, in the example shown in Fig. 14, when the user moves in the direction directing from the node N2 to the node N3 on the branch B23, the node N2 serves as a start-point node, the node N3 serves as an end-point node, and the forward direction vector can be expressed like "N2 → N3." Conversely, the forward direction vector when the user moves in the direction directing from the node N3 to the node N2 is "N3 → N2."

The data updating unit 170 performs a current position update processing taking a direction indicated by the forward direction vector as the forward direction. Therefore, in the example shown in Fig. 14, if the forward button B1 is continuously pressed with the forward direction vector "N2 → N3" set, update of the current position data is performed so that the current position P moves toward the end-point node N3, and if the backward button B2 is continuously pressed, update of the current position data is performed so that the current position P moves toward the start-point node N2. Because this current position update processing is performed irrespective of the line of sight direction data (azimuth angle ϕ), even with ϕ = 270 degrees (when the line of sight has been directed in a direction of the start-point node N2), if the forward button B1 is continuously pressed with the forward direction vector "N2 → N3" set, the current position P moves toward the end-point node N3.

Thus, the forward direction vector needs to be set for each branch along which the user is moving, and therefore, in the case of changing to another branch via a node, it is necessary to set a new forward direction vector. Moreover, in the case of arriving at a node where a plurality of branches are connected, a forward direction vector that needs to be set differs depending on to which branch the user proceeds. Therefore, in the case of the working example shown here, the data updating unit 170 has a function of temporarily stopping a current position update processing when the current position P has arrived at any node, allowing the user to select a new branch having its start point at the arrival node, setting a new forward direction vector having said arrival node as its start-point node and another end point of the selected branch as its end-point node, and then resuming the current position update processing.

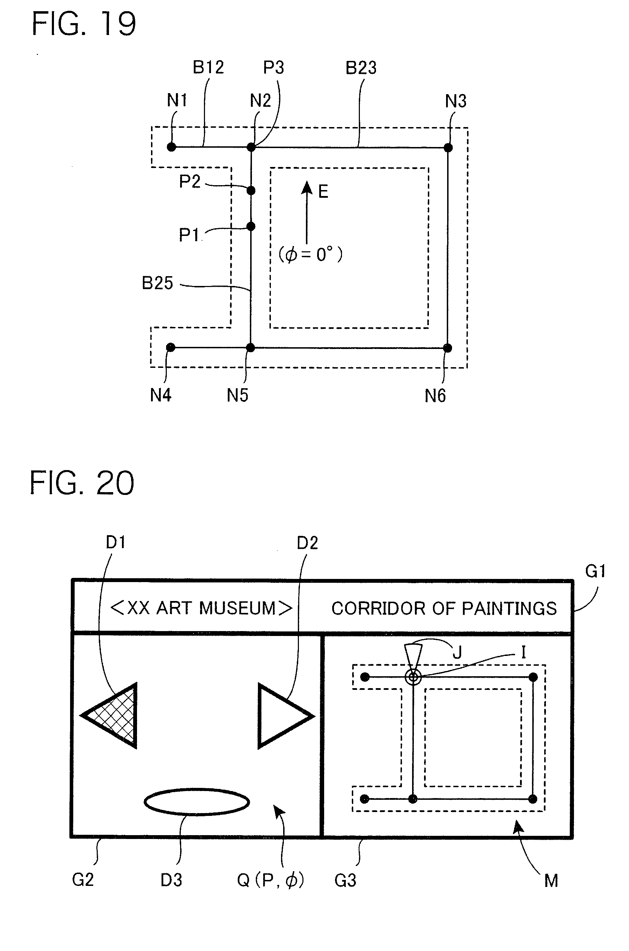

Here, referring to Fig. 19, a specific current position update processing and forward direction vector setting processing to be performed by the data updating unit 170 on the route with branching will be described. It is now assumed in Fig. 19 that the user is advancing from the node N5 toward the node N2 along the branch B25 in the virtual space. In this case, the forward direction vector set in the data updating unit 170 is "N5 → N2." Here, if the user holds the controller 175 shown in Fig. 18 and continuously presses the forward button B1, the current position P then moves to the illustrated points P1, P2, and P3. Here, the point P3 is at the position of the node N2. Also, in the illustrated example, because the line of sight direction has been set to a direction (azimuth angle ϕ = 0 degrees) that is coincident with the forward direction, in the field of view image display area G2, a moving image of advancing straight ahead is displayed (the line of sight vector E is coincident with the forward direction vector).

Thus, when the current position P has arrived at any node, the data updating unit 170 temporarily stops the current position update processing. Therefore, even if the user has continuously pressed the forward button B1, the user's movement on the route stops at the point in time of arrival at the node. In the case of the illustrated example, the current position update processing is discontinued at the point in time where the current position P has arrived at the node N2, and the current position P remains at the node N2. The current position update processing is suspended until the user performs an operation for selecting a new branch having its start point at the arrival node N2. Also, because the line of sight direction update processing is successively performed, the user, by operating the button B3 or B4 at the position of the node N2, can perform an operation of looking around the surroundings, and can obtain information for selecting a new branch.

In the case of the working example shown here, adopted is a method of causing directional markers to be displayed in the field of view image display area G2 and allowing the user to select any directional marker, in order to allow the user to select a new branch. That is, the data updating unit 170 has a function of, when the current position P has arrived at any node, causing a directional marker D indicating a direction of a new branch having its start point at the arrival node to be displayed on the field of view image Q (P, ϕ). In Fig. 1, the arrow directing from the route mapping unit 180 toward the data updating unit 170 indicates that the route information R (node position information and branch connection information) is given to the data updating unit 170. The data updating unit 170, by reference to the route information R, can recognize that the current position P has arrived at any node, and can recognize a new branch having its start point at said arrival node.

In the case of the example shown in Fig. 19, there are three branches of B12, B23, B25 as new branches having their start points at the arrival node N2. Here, the branch B25 is a branch along which the user has moved so far, but it is also possible to turn back to the branch B25 from the arrival node N2, and therefore, the branch B25 is also included in the options. Fig. 20 is a plan view showing a display screen at the point in time of arrival at the node N2 (the field of view image itself in G2 is omitted). The directional markers D1, D2, D3 shown in Fig. 20 correspond to these three branches B12, B23, B25, and if the user performs an operational input for selecting any directional marker, a branch corresponding to the selected directional marker is selected as a new branch.

In this working example, the controller 175 is provided with a marker selection button to perform an operation for selecting a specific directional marker. That is, in Fig. 18, the button B5 corresponds to the marker selection button, which is arranged so that directional marker selections are switched every time the user presses the marker selection button B5. In the example shown in Fig. 20, only the directional marker D1 is shown with hatching, and this indicates that only the directional marker D1 is displayed in a highlighted manner (for example, it suffices to cause a change in color, cause a change in luminance, and/or cause blinking). If the user presses the marker selection button B5, the directional marker to be displayed in a highlighted manner switches in order such as, for example, D1 to D2 to D3 to D1 to, ...

Thus, the user can cause a desired directional marker to be displayed in a highlighted manner by pressing the marker selection button B5. Then, if the user presses the forward button B1 with a specific directional marker displayed in a highlighted manner, selection of said directional marker is performed. The data updating unit 170 sets a new forward direction vector using, as a branch selected by the user, a branch corresponding to the directional marker thus selected by the marker selection button B5, and resumes a current position update processing.

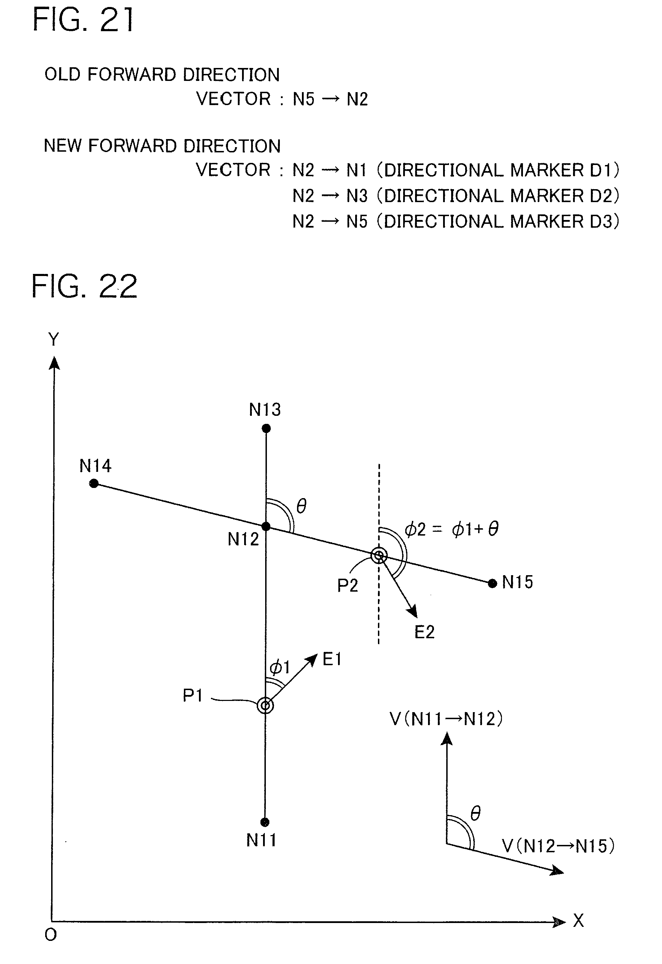

Fig. 21 is a view showing a setting change example of a forward direction vector that is retained by the data updating unit 170. As shown in Fig. 19, when the user is proceeding from the node N5 toward the node N2 along the branch B25, the data updating unit 170 retains a forward direction vector "N5 → N2," and a processing for a setting change from the old forward direction vector "N5 → N2" to a new forward direction vector is performed when the user has arrived at the node N2. At this time, candidates for the new forward direction vector are, as illustrated, three vectors of "N2 → N1, " "N2 → N3," "N2 → N5," which correspond to the directional markers D1, D2, D3, respectively. Therefore, for example, if the user selects the directional marker D2, a new forward direction vector "N2 → N3" is set. This vector indicates proceeding from the start-point node N2 to the end-point node N3 along the branch B23 shown in Fig. 19.

Thus, in the case of the working example shown here, there is an arrangement to temporarily stop a current position update every time of arrival at a node and resume the current position update after allowing the user to select a new branch, and therefore, a route to be a target has branching at a node(s), the user can move in any direction by his/her free will.

Also, the directional markers D1, D2, D3 shown in Fig. 20 are markers that are displayed in terms of the node N2 of Fig. 19, and are for selecting three branches that compose a T-shaped intersection. Therefore, for example, in terms of the node N3 that constructs an L-shaped intersection, only two directional markers are displayed, and in terms of a node that constructs a crossroad, four directional markers are displayed. Because the data updating section 170 has been supplied with branch connection information with regard to the respective nodes as the route information R, an appropriate directional marker can be displayed for each individual node.

Moreover, at each node, the user can look around the surroundings by changing his/her line of sight direction, and therefore, it is necessary for the data updating unit 170 to perform a processing for judging, by reference to the line of sight direction data (azimuth angle ϕ), at which position on the field of view image Q (P, ϕ) which directional marker is displayed in a superimposed manner, and superimposing each directional marker at an appropriate position on the field of view image Q (P, ϕ). Further, practically, it is preferable to adopt, as the shape of each directional marker, a shape that allows signaling a general forward direction to the user. In the example shown in Fig. 20, the directional markers D1 and D2 have triangular shapes so as to allow signaling of proceeding in the left direction or the right direction, and the directional marker D3 has an elliptic shape so as to allow signaling of proceeding in the back-side direction.

In the above, a description has been given of an example of the processing for changing the setting of the forward direction vector at a node, but practically, it is preferable to perform a processing for updating the line of sight direction together with the setting change processing for the forward direction vector. For example, a case where, in the example shown in Fig. 19, the user has arrived at the node N2 along the branch B25, and then moved toward the node N3 along the branch B23 by selecting the directional marker D2 shown in Fig. 20 is considered. In this case, the forward direction vector is changed from "N5 → N2" to "N2 → N3," which is as already described. Moreover, the moving route of the current position P also makes a transition from the branch B25 to the branch B23. However, the line of sight direction does not change between before and after passing through the node N2 unless the user voluntarily changes the line of sight direction by operating the left-facing button B3 or the right-facing direction B4.

For example, in the case of the example shown in Fig. 19, if the line of sight vector E during a movement along the branch B25 had been upward (azimuth angle ϕ = 0 degrees) in the figure, the line of sight direction when the user entered the branch B23 remains in the same direction. This means that during a movement along the branch B25, the user had his/her line of sight directed in the forward direction, but after entering the branch B23, the user moves with his/her face turned to the left to direct his/her line of sight toward the wall surface of the corridor. Of course, the user can direct his/her line of sight in the forward direction by pushing the right-facing button B4, but usually, it is natural for a human to walk with his/her face turned in the forward direction, and therefore, it is unnatural that only the forward direction vector is changed and the line of sight vector is not changed when the user turns a corner.

For solving such a problem, it suffices to perform a line of sight direction update processing as well as a processing for changing the forward direction vector. In the case of the working example shown here, the route information storage unit 130 has stored the route information R indicating a route constructed by a set of straight branches, and all branches are formed by straight lines. Therefore, it suffices that the data updating unit 170 performs a processing for updating the line of sight direction data based on an angle θ created by a first branch and a second branch so that a relative line of sight direction based on a reference of the forward direction vector becomes constant when the user proceeds from the first branch to the second branch.

Fig. 22 is a plan view for explaining a specific method for such update processing. In this example, there are five nodes N11, N12, N13, N14, N15 defined on a two-dimensional XY coordinate system, the nodes N11, N12, N13 construct a first straight line (parallel to the Y-axis), the nodes N14, N12, N15 construct a second straight line, and both straight lines cross at a crossing angle θ. Here, suppose a case where the user who is proceeding from the node N11 toward the node N12 arrives at the node N12 and proceeds from the node N12 to the node N15 after arriving at the node N12. In this case, the forward direction vector is changed from "N11 → N12" to "N12 → N15" as a result of the user passing through the node N12. That is, as shown in the lower right part of Fig. 22, if the forward direction vectors are represented by V (N11 → N12) and V (N12 → N15), respectively, the angle created by both vectors is equal to the crossing angle θ.

On the other hand, suppose that, at an arbitrary point P1 on a branch from the node N11 to the node N12, the line of sight vector E1 has been directed in such a direction as illustrated, the azimuth angle indicating a line of sight direction has been set to ϕ1, and the user has arrived at the node N12 with said azimuth angle ϕ1 maintained. In this case, if the line of sight vector E2 at a point P2 that is on a branch from the node N12 to the node N15 is automatically corrected into such a direction as illustrated, the line of sight direction that is natural to the user can be maintained. That is, before the user turned the corner of the node N12, the user's line of sight had been directed in an obliquely right direction with respect to the forward direction, and therefore, the line of sight direction is natural if the line of sight is also directed in an obliquely right direction with respect to the forward direction after the user turns the corner of the node N12 (of course, when the user's line of sight had been directed in the forward direction, this is also directed in the forward direction after the user turns the corner).

For directing the line of sight vector E2 in the illustrated direction, it suffices to set the azimuth angle ϕ2 after the user passes through the node N12 to ϕ2 = ϕ1+θ. That is, it suffices to perform a processing for updating the line of sight direction data based on an angle θ created by a first branch and a second branch so that the line of sight direction based on a reference of each forward direction vector becomes constant when the user proceeds from the first branch to the second branch. Based on a reference of the forward direction vector V (N11 → N12), the line of sight vector E1 is directed in the right direction by an angle ϕ1, and based on a reference of the forward direction vector V (N12 → N15), the line of sight vector E2 is still directed in the right direction by an angle ϕ1.

### <Section 4. Several Modifications>

In the above, the free viewpoint video display apparatus according to the present invention has been described based on a basic embodiment. Hereinafter, several modifications will be mentioned.

### (1) Method for creating omnidirectional image

In Section 1, an example of obtaining an omnidirectional image (panoramic image) by cutting out a region having an elevation angle of a predetermined reference value or less from a distorted circular image obtained by shooting using a shooting device as shown in Fig. 7 and applying thereto distortion correction has been mentioned, but of course, the device to be used for creation of an omnidirectional image is not limited to the shooting device shown in Fig. 7. For example, in the shooting device shown in Fig. 7, a distorted circular image is formed on an imaging plane of a video camera by using the fisheye lens 10, but an omnidirectional mirror or the like may be used in place of the fisheye lens 10.

Moreover, in Section 1, an example of creating an omnidirectional image based on shot images obtained by shooting of an existing facility has been mentioned, but a virtual facility may be created on a computer, and an image created based on a three-dimensional CG image showing a virtual route in this virtual facility may be used as an omnidirectional image. In this case, inside the omnidirectional image storage unit 110, a rectangular panoramic image which is created by moving a virtual omnidirectional camera along a virtual route made of a three-dimensional CG image is stored as an omnidirectional image.

### (2) Route including curved lines

The working examples described so far are all examples using routes consisting only of straight branches, but the present invention can be applied also to a facility including a curved route. Specifically, with regard to a curved route, by approximating by a polygonal line consisting of a plurality of nodes and straight lines to connect these, the curved route can be dealt with as a route consisting only of linear branches as before. Of course, it is also possible to define a curved branch(s) for which a pair of nodes are connected by a Bézier curve or the like therebetween. In this case, by indicating the position of an arbitrary point on the curved line by an intervening variable of 0 to 1, an interpolating operation for determining a corresponding frame can also be performed without any problem.

### (3) Adjustment of elevation angle

In the working examples described so far, only the azimuth angle ϕ is used as a parameter indicating the line of sight direction, but it is also possible to add a parameter of an elevation angle Ψ. In this case, the line of sight vector E is determined by the azimuth angle ϕ and the elevation angle Ψ. When the elevation angle Ψ is thus used as a parameter, a cutout frame by the image cutout unit 140 is determined according to both of the azimuth angle ϕ and the elevation angle Ψ. Therefore, for example, in the case of the example shown in Fig. 15, it suffices to set the longitudinal dimension of a cutout frame to be shown by thick lines shorter, determine the lateral position of the cutout frame based on the azimuth angle ϕ, and determine the longitudinal position thereof based on the elevation angle Ψ. Moreover, it suffices to provide the controller 175 with buttons to provide instructions for changing the elevation angle Ψ, such as an up-facing button and a down-facing button.

### (4) Controller configuration

The controller 175 shown in Fig. 18 shows an example serving as equipment being a component of the data updating unit 170, and practically, it is possible to use various other modes of equipment as a controller. Particularly, the mode and arrangement of operation buttons etc., can be freely set in design. In Section 3, the role of the buttons B6 to B9 has not been described, but these buttons can be assigned with various functions such as, for example, a function of setting the moving speed and a function of setting the foregoing elevation angle Ψ.

Moreover, it is also possible to use a joystick in place of the buttons. For example, a single joystick that is structured so as to provide a forward movement instruction when being tilted to the front, a backward movement instruction when being tilted to the rear, a left-facing instruction when being tilted to the left, and a right-facing instruction when being tilted to the right can be used in place of the buttons B1 to B4. Further, the joystick can be used also in such a manner as changing the moving speed based on the tilt angle.

### (5) Linkage between line of sight direction and forward direction

In the working examples described so far, a forward direction vector is set only when the user has arrived at a node, and there has been a specification such that the forward direction vector does not change even if the user changes his/her line of sight direction when he/she is moving along a single branch, but it is also possible to adopt an operation such as to reverse the forward direction vector according to the line of sight direction.

For example, if a critical condition such as a case where the angle formed by the line of sight vector with respect to the forward direction vector exceeds 90 degrees or exceeds 145 degrees is set in advance so that the forward direction vector is reversed when said critical condition is exceeded, in a case such that the forward button is continuously pressed while the user turns back around, the forward direction vector is reversed, so that the user moves in a direction reverse to the past (in a direction in which the user has turned around). Performing such an operation allows providing a simulation with sense of presence closer to human behavior.

## Claims

1. A free viewpoint video display apparatus for displaying a field of vision in any direction viewed from a viewpoint moving along a predetermined route, comprising:
an omnidirectional image storage unit (110) for storing omnidirectional images (F0000-F2400), in respective frame units, having fields of vision of 360 degrees shot using an omnidirectional camera (20) while moving along the route;
a route information storage unit (130) for storing route information (R) that includes position information indicating positions of a plurality of nodes (N1-N6) constructing the route and connection information indicating a branch (B12-B56) for a connection between the nodes (N1-N6);
a correspondence information storage unit (120) for storing correspondence information (C) indicating correspondence between each individual frame of the omnidirectional images (F0000-F2400) stored in the omnidirectional image storage unit (110) and a node (N1-N6) or one point on a branch (B12-B56) in the route information (R) stored in the route information storage unit (130);
a current position data storage unit (150) for storing current position data indicating a current position (P) on the route;
a line of sight direction data storage unit (160) for storing line of sight direction data indicating a line of sight direction (ϕ);
a data updating unit (170) for performing, based on a user's input operation, a current position update processing for updating the current position data so that the current position (P) moves on the route and a line of sight direction update processing for updating the line of sight direction data so that the line of sight direction (ϕ) changes;
an image cutout unit (140) for recognizing a current position frame corresponding to a current position (P) indicated by the current position data by making reference to the correspondence information (C), and reading out an omnidirectional image (F0452) of the current position frame from the omnidirectional image storage unit (110), and cutting out, from a read-out omnidirectional image (F0452), a field of view image (Q(P, ϕ)) that constructs a field of vision in a line of sight direction (ϕ) indicated by the line of sight direction data;
a route mapping unit (180) for creating, based on the current position data and the line of sight direction data, a route map (M) on which indices (I, J) indicating a current position (P) and a line of sight direction (ϕ) are superimposed upon a plan view of the route; and
an image display unit (190) for displaying side by side the field of view image (Q(P, ϕ)) and the route map (M).

2. The free viewpoint video display apparatus according to claim 1, wherein:
the omnidirectional image storage unit (110) stores as an omnidirectional image (F0000-F2400) a rectangular panoramic image that is obtained by cutting out a region having an elevation angle of a predetermined reference value or less from a distorted circular image obtained by shooting a hemispherical field of vision located higher than a predetermined horizontal plane using an omnidirectional camera (20) fitted with a fisheye lens (10) or an omnidirectional mirror and applying thereto distortion correction.

3. The free viewpoint video display apparatus according to claim 1, wherein:
the omnidirectional image storage unit (110) stores as an omnidirectional image (F0000-F2400) a rectangular panoramic image created by moving a virtual omnidirectional camera along a virtual route made of a three-dimensional CG image.

4. The free viewpoint video display apparatus according to claim 1, wherein:
the route information storage unit (130) stores route information (R) that includes position information indicating coordinate values of individual nodes (N1-N6) on a two-dimensional XY coordinate system and connection information indicating, with regard to combinations of two arbitrary nodes among all the nodes (N1-N6), whether a straight branch for a connection between the two arbitrary nodes of each combination exists, and
the current position data storage unit (150) stores current position data indicating coordinate values of a current position (P) on the two-dimensional XY coordinate system.

5. The free viewpoint video display apparatus according to claim 4, wherein:
the line of sight direction data storage unit (160) stores as line of sight direction data an azimuth angle ϕ (0 degrees ≤ ϕ < 360 degrees) with respect to a predetermined reference axis (Y) of a two-dimensional XY coordinate system, and
the image cutout unit (140) cuts out, from the read-out omnidirectional image (F0452), a field of view image (Q(P, ϕ)) that constructs a field of vision within a range of an azimuth angle ϕ-Δ/2 to ϕ+Δ/2 provided that Δ denotes a predetermined cutout angle.

6. The free viewpoint video display apparatus according to claim 1, wherein:
the omnidirectional image storage unit (110) stores frame-based images (F0000-F2400) imparted with a series of frame numbers,
the correspondence information storage unit (120) stores correspondence information (C) for identifying frame numbers of frames corresponding to individual nodes (N1-N6), and
the image cutout unit (140), when the current position (P) is a node, recognizes as a current position frame a frame imparted with a frame number corresponding to said node, and when the current position (P) is a midway point on a branch (B12-B56), recognizes as a current position frame a frame imparted with a frame number determined by linear interpolation based on a pair of frame numbers corresponding to a pair of nodes located at both ends of said branch.

7. The free viewpoint video display apparatus according to claim 1, wherein:
the data updating unit (170) comprises a controller (175) including a forward button (B1), a backward button (B2), a left-facing button (B3), and a right-facing button (B4), and
said data updating unit (170) updates the current position data so that the current position (P) moves at a predetermined speed in a predetermined forward direction on the route while the forward button (B1) is pressed, updates the current position data so that the current position (P) moves at a predetermined speed in a direction reverse to the forward direction on the route while the backward button (B2) is pressed, updates the line of sight direction data so that the line of sight direction (ϕ) changes toward the left at a predetermined speed while the left-facing button (B3) is pressed, and updates the line of sight direction data so that the line of sight direction (ϕ) changes toward the right at a predetermined speed while the right-facing button (B4) is pressed.

8. The free viewpoint video display apparatus according to claim 7, wherein:
the data updating unit (170) has a function of setting a forward direction vector (V (N11 → N12)) from a start-point node (N11) to an end-point node (N12) of a branch including a current position (P1), performs a current position update processing taking a direction indicated by the forward direction vector as a forward direction, and
temporarily stops the current position update processing when the current position (P1) has arrived at any node, allows a user to select a new branch having its start point at an arrival node (N12), sets a new forward direction vector (V (N12 → N15)) having the arrival node (N12) as its start-point node and another end point (N15) of the selected new branch as its end-point node, and then resumes the current position update processing.

9. The free viewpoint video display apparatus according to claim 8, wherein:
the data updating unit (170), when the current position (P) has arrived at any node, causes a directional marker (D1-D3) indicating a direction of a new branch having its start point at an arrival node to be displayed on a field of view image (Q(P, ϕ)),
the controller (175) further includes a marker selection button (B5) to perform an operation for selecting a specific directional marker (D1-D3), and
the data updating unit (170) uses, as a branch selected by the user, a branch corresponding to a directional marker (D1-D3) selected by the marker selection button (B5).

10. The free viewpoint video display apparatus according to claim 8, wherein:
the route information storage unit (130) has stored route information (R) indicating a route constructed by a set of straight branches (B12-B56), and
the data updating unit (170) performs a processing for updating the line of sight direction data based on an angle θ which is defined as an angle between a first branch and a second branch so that a relative line of sight direction based on a reference of the forward direction vector becomes constant when the user proceeds from the first branch to the second branch.

11. A non-transitory computer-readable medium storing a program for causing a computer to function as the free viewpoint video display apparatus according to claim 1.
